# EUROPÄISCHE PATENTSCHRIFT

(11) **EP 3 071 865 B1**
(45) Veröffentlichungstag und Bekanntmachung des Hinweises auf die Patenterteilung: **15.04.2020**
(21) Anmeldenummer: 14798685.5
(22) Anmeldetag: 16.10.2014
(51) Int. Cl.: F16F 15/133, F16F 15/131, F16F 15/121

(54) **DREHMOMENTÜBERTRAGUNGSVORRICHTUNG**
TORQUE-TRANSMISSION DEVICE
DISPOSITIF DE TRANSFERT DE COUPLE

(30) Priorität: 20.11.2013 DE 102013223651
(43) Veröffentlichungstag der Anmeldung: 28.09.2016
(73) Patentinhaber: Schaeffler Technologies AG & Co. KG, 91074 Herzogenaurach (DE)
(72) Erfinder: EDL, Ralf, 77855 Achern (DE)
(86) Internationale Anmeldenummer: PCT/DE2014/200560
(87) Internationale Veröffentlichungsnummer: WO 2015/074653

(56) Entgegenhaltungen:
- DE-A1- 3 627 784
- DE-A1- 19 729 423
- US-A- 4 638 684

## Beschreibung

Die Erfindung betrifft eine Drehmomentübertragungsvorrichtung, insbesondere für den Antriebsstrang eines Kraftfahrzeugs.

DE 197 29 423 A1 offenbart eine gattungsgemäße Drehmomentübertragungsvorrichtung.

Drehmomentübertragungsvorrichtungen, wie insbesondere Zweimassenschwungräder, sind im Stand der Technik gut bekannt. Dabei ist ein Zwei-Massenschwungrad mit einer Primärmasse mit einer Kurbelwelle eines Verbrennungsmotors verbindbar, wobei die Sekundärmasse in der Regel über eine Kupplung mit einer Getriebeeingangswelle verbindbar ist. Zwischen Primärmasse und Sekundärmasse ist ein Drehschwingungsdämpfer angeordnet, um beispielsweise eingangsseitig anstehende Drehmomentungleichförmigkeiten dämpfen zu können. Diese Drehschwingungsdämpfer sind dabei mit Federn ausgestattet, welche so abgestimmt sein müssen, dass sie bei hohen anstehenden Drehmomenten noch eine erwünschte Dämpfung bewirken. Dies bewirkt, dass die Drehsteifigkeit einen entsprechenden Wert annehmen muss oder dass die Federn oft auch mehrstufig ausgelegt sind, um in einer ersten Stufe eine weiche Kennlinie zu erhalten und um mit einer zweiten Stufe das maximale Drehmoment übertragen zu können.

Beim Motorstart treten dabei bei einem Verbrennungsmotor Drehmomentschwankungen auf, so dass der Schwingwinkel der beiden Drehmassen von Primär- und Sekundärschwungmasse in der ersten Dämpfungsstufe relativ groß ist. Der Motorstart wird dadurch erleichtert, weil die Resonanzfrequenz des Zwei-Massenschwungrads schnell durchschritten wird. Die dennoch für hohe Drehmomente benötigte zweite Federstufe führt allerdings zu einer Verschlechterung der Isolationseigenschaften.

Es ist die Aufgabe der Erfindung, eine Drehmomentübertragungsvorrichtung zu schaffen, welche einfach aufgebaut ist und dennoch gegenüber dem Stand der Technik verbessert ist. Die Aufgabe der Erfindung wird mit den Merkmalen von Anspruch 1 gelöst.

Ein Ausführungsbeispiel der Erfindung betrifft eine Drehmomentübertragungsvorrichtung mit einer Primärmasse und einer Sekundärmasse, mit einem zwischen der Primärmasse und der Sekundärmasse angeordneten Drehschwingungsdämpfer mit zumindest einem Kraftspeicher, wobei die Primärmasse relativ zur Sekundärmasse entgegen der Rückstellkraft des zumindest einen Kraftspeichers verdrehbar angeordnet ist, wobei an einer der Schwungmassenelemente von Primärmasse und Sekundärmasse zumindest ein Klemmkörper verlagerbar angeordnet ist, welcher sich in einer ersten ausgewählten Position mit dem anderen Schwungmassenelement von Primärmasse und Sekundärmasse verbindet, um diese relativ zueinander zu blockieren und welcher sich in zumindest einer zweiten ausgewählten Position oder in jeder anderen Position nicht mit dem anderen Schwungmassenelement verbindet, so dass die beiden Schwungmassenelemente relativ zu einander verdrehbar sind. Dadurch wird in einer Betriebssituation, in welcher der Klemmkörper die beiden Schwungmassenelemente verklemmt, das Schwungrad kurzgeschlossen und die Schwungmassenelemente starr verbunden. In einer anderen Betriebssituation klemmt der Klemmkörper nicht und die beiden Schwungmassenelemente sind relativ zueinander verdrehbar, wodurch der Drehschwingungsdämpfer aktiv ist. Dadurch kann beim Anfahren bzw. beim Motorhochlauf der schwingwinkel- und reibungsbedingte Energieverzehr reduziert werden.

Dabei ist es vorteilhaft, wenn der Klemmkörper ein verdrehbar gelagerter Klemmkörper ist, welcher an dem einen Schwungmassenelement verdrehbar gelagert ist. Dadurch kann der Klemmkörper sich zwischen den beiden Positionen gezielt verdrehen.

Auch ist es zweckmäßig, wenn das andere Schwungmassenelement einen in axialer Richtung vorstehenden Ringbereich aufweist, welcher den Klemmkörper des einen Schwungmassenelements übergreift und der Klemmkörper an dem anderen Schwungmassenelement am Ringbereich in der ersten Position reibschlüssig anlegbar ist. So kann eine einfache und bauraumsparende Gestaltung erreicht werden.

Auch ist es zweckmäßig, wenn eine Mehrzahl von Klemmkörpern vorgesehen sind, welche an dem einen Schwungmassenelement drehbar angeordnet sind. Dabei sind diese über dem Umfang des Schwungmassenelements verteilt angeordnet. Dies bewirkt eine verbesserte Klemmung und eine homogenere Massenverteilung.

Auch ist es vorteilhaft, wenn der Klemmkörper T-förmig ausgebildet ist, wobei die Drehachse des Klemmkörpers durch einen Bereich im Fuß des T geführt ist. Dann kann das Element des Querbalkens des T als Reibschuh zur Anlage an dem Ringbereich dienen.

Auch ist es vorteilhaft, wenn der in axialer Richtung vorstehende Ringbereich ein mit dem anderen Schwungmassenelement verbundenes ringartiges Blechelement ist. So kann der Ringbereich beispielsweise mit dem Schwungmassenelement verbunden, wie verschweißt oder vernietet sein. Dies erleichtert die Montage.

Auch ist es vorteilhaft, wenn der in axialer Richtung vorstehende Ringbereich im Schnitt L-förmig ausgebildet ist. Dadurch wird eine gute Befestigbarkeit erreicht.

Weiterhin ist es vorteilhaft, wenn die erste ausgewählte Position relativ zur zweiten ausgewählten Position um einen Drehwinkel verdreht ist, welche kleiner als 45° ist. Dadurch wird erreicht, dass der Klemmkörper nur eine geringe Verdrehung zwischen den Positionen benötigt, so dass eine schnelle Klemmung bzw. Freigabe der Klemmung erreicht wird.

Auch ist es zweckmäßig, wenn das eine Schwungmassenelement die Sekundärmasse und das anderen Schwungmassenelement die Primärmasse ist.

Auch ist es vorteilhaft, wenn das eine Schwungmassenelement die Primärmasse und das anderen Schwungmassenelement die Sekundärmasse ist.

Die vorliegende Erfindung wird nachfolgend anhand bevorzugter Ausführungsbeispiele in Verbindung mit den zugehörigen Figuren näher erläutert:
Dabei zeigen:
- Figur 1: eine Darstellung einer erfindungsgemäßen Drehmomentübertragungsvorrichtung, und
- Figur 2: eine Darstellung eines Klemmkörpers.

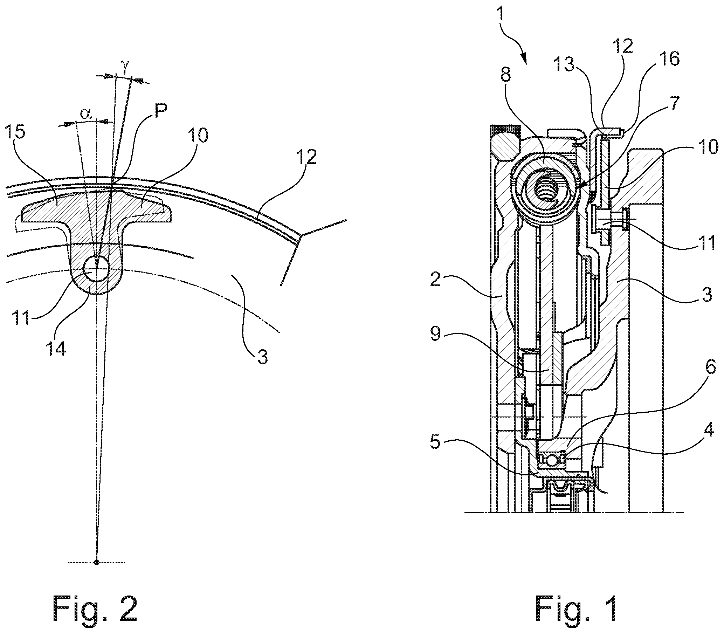

Die Figur 1 zeigt eine Drehmomentübertragungsvorrichtung 1 mit einer Primärschwungmasse 2 und einer Sekundärschwungmasse 3 im Halbschnitt. Die Primärschwungmasse 2 ist mit einer Kurbelwelle einer Brennkraftmaschine verbindbar. Die Sekundärschwungmasse 3 ist relativ zur Primärschwungmasse 2 verdrehbar mittels des Lagers 4 gelagert. Dazu ist mit der Primärschwungmasse 2 ein Fuß 5 verbunden, welcher das Lager 4 radial außen aufnimmt, während die Sekundärschwungmasse 3 mit einem Absatz 6 das Lager 4 radial innen aufnimmt.

Die Primärschwungmasse 2 weist Aufnahmen 7 für Federn 8 auf, in welchen die Federn 8 über den Umfang der Primärschwungmasse 2 verteilt angeordnet sind.

Zwischen die Federn 8 greift von radial innen ein Flansch 9 ein, welcher mit der Sekundärschwungmasse 3 verbunden ist. Dadurch erfolgt eine Verdrehung der Primärschwungmasse 2 relativ zur Sekundärschwungmasse 3 entgegen der Rückstellkraft der Federn 8. Die Kraftspeicher bzw. Federn 8 sind Teil eines Drehschwingungsdämpfers, welcher zwischen den beiden Schwungmassen angeordnet ist.

An einer der Schwungmassenelemente von Primärschwungmasse und Sekundärschwungmasse, in Figur 1 an der Sekundärschwungmasse 3, ist zumindest ein Klemmkörper 10, bevorzugt eine Mehrzahl von Klemmkörpern 10 angeordnet. Die Klemmkörper 10 sind mittels der Bolzen 11 an der Sekundärschwungmasse drehbar gelagert. Dabei ist der Bolzen 11 beispielsweise als Nietelement ausgebildet und mit der Sekundärschwungmasse 3 verbunden. Alternativ könnte der Klemmkörper 10 auch mittels des Bolzens 11 an der Primärschwungmasse 2 drehbar angebunden sein.

Die Klemmkörper 10 sind dabei derart verlagerbar angeordnet, dass sie zwischen zwei Positionen verdrehbar sind, wobei sich die Klemmkörper 10 zwischen einer ersten ausgewählten Position und einer zweiten ausgewählten Position bewegen können.

In der ersten ausgewählten Position ist der Klemmkörper 10 in Reibkontakt mit dem anderen Schwungmassenelement von Primärmasse und Sekundärmasse, hier also mit der Primärmasse. Dieses in Kontaktbringen bewirkt, dass die beiden Schwungradelemente relativ zueinander blockiert sind. Der Klemmkörper stützt sich dabei radial außen an einem Ringelement 12 ab, der sich in axialer Richtung erstreckt. Der Klemmkörper schwenkt dabei nach radial außen und stützt sich so radial außen an dem Ringelement ab. Es wird eine reibschlüssige Verbindung bewirkt.

In der zweiten ausgewählten Position liegt keine Verbindung zwischen dem Klemmkörper 10 und dem Ringelement 12 vor. In dieser Betriebssituation sind die beiden Schwungmassenelemente relativ zueinander verdrehbar.

Das Ringelement 12 ist als im Schnitt L-förmiges Ringelement ausgebildet, welches bevorzugt mit seinem radial ausgerichteten Schenkel mit der Primärschwungmasse 2 verbunden ist, wie verschweißt oder vernietet ist. Der Klemmkörper 10 stützt sich mit seiner radial außen liegenden Stirnseite an dem sich in axialer Richtung erstreckenden Schenkel 13 ab.

Die Figur 2 zeigt den Klemmkörper 10, wie er mittels des Bolzens 11 drehbar gelagert angeordnet ist. Der Klemmkörper ist dabei etwa T-förmig ausgebildet, wobei die Lagerstelle des Bolzens 11 im Bereich des Fußes 14 des T angeordnet ist. Dabei weist der Klemmkörper eine nach radial außen weisende Stirnseite 15 auf, welche mit der Reibfläche des Ringelements 12 in Wirkkontakt treten kann.

Der Kontakt zur Primärschwungmasse und die Schwerpunktslage des Klemmkörpers sind dabei so gestaltet, dass eine Bewegungsselbsthemmung eintritt, was dazu führt, dass die Sekundärschwungmasse zeitweise mit der Primärschwungmasse fest verbunden ist. Die Verbindung wird aber wieder gelöst, sobald eine Beschleunigungs- und damit Kraftumkehr an der Sekundärseite eintritt. Die Ankopplung der Sekundärschwungmasse an die Primärschwungmasse liegt während des Teiles der Schwingungsperiode vor, zu dem eine entsprechende Beschleunigung auf die Sekundärschwungmasse und damit auf den Klemmkörper vorliegt.

Bei Beginn des Motorstartvorgangs wird die Sekundärseite zunächst bei niedriger mittlerer Drehzahl eine starke Schwingungsanregung erfahren, die den Klemmkörper 10 auslenkt und mit der an der Primärseite angebrachten, ringförmigen Reibfläche des Ringelements 12 in Kontakt bringt. Es tritt Selbsthemmung des Klemmkörpers 10 ein und die Sekundärschwungmasse stützt sich an der Primärschwungmasse ab, so dass der weitere Aufbau der Schwingung der Sekundärseite gegen die Primärseite unterbunden wird. Im Idealfall wird sich der Klemmkörper 10 bereits im Ruhezustand unter seiner Gewichtskraft in die Selbsthemmlage begeben, so dass der Motorstart bereits im überbrückten Zustand beginnen kann.

Vorteilhaft sorgt bei dieser Anordnung die Fliehkraft dafür, dass der Klemmkörper 10 bestimmungsgemäß im Wesentlichen nur im Bereich niedrigster Motordrehzahlen arbeitet. Der Klemmkörperfreilauf kann auch während des Abstellens des Motors wirken, sofern die Drosselklappe des Motors geöffnet bleibt.

Bei der Auslenkung der Klemmkörper als Pendel wird mit Erreichen des Winkels α die Berührung zwischen dem Klemmkörper 10 und der ringförmigen Reibfläche des Ringelements 12 am Punkt "P" eintreten. Die Reibfläche ist mit der Primärschwungmasse fest verbunden.

Diese Reibfläche kann zur Reduzierung von Verschleiß eine geeignete Wärmebehandlung oder ein separates Bauteil 16 aufweisen.

Die Auslegung des Klemmkörpers ist vorteilhaft so, dass im normalen Zugbetrieb der Schwingwinkel stets kleiner als der Winkel α ist. Die kinematische Anordnung ist vorteilhaft so, dass der Winkel γ kleiner als der Reibungswinkel ist (tan(γ) < Reibwert).

### Bezugszeichenliste

- 1: Drehmomentübertragungsvorrichtung
- 2: Primärmasse
- 3: Sekundärmasse
- 4: Lager
- 5: Fuß
- 6: Absatz
- 7: Aufnahme
- 8: Feder
- 9: Flansch
- 10: Klemmkörper
- 11: Bolzen
- 12: Ringelement
- 13: Schenkel
- 14: Fuß
- 15: Stirnseite
- 16: Bauteil

## Patentansprüche

1. Drehmomentübertragungsvorrichtung (1) mit einer Primärmasse (2) und einer Sekundärmasse (3), mit einem zwischen der Primärmasse und der Sekundärmasse angeordneten Drehschwingungsdämpfer mit zumindest einem Kraftspeicher (8), wobei die Primärmasse relativ zur Sekundärmasse entgegen der Rückstellkraft des zumindest einen Kraftspeichers (8) verdrehbar angeordnet ist, wobei an einem der Schwungmassenelemente von Primärmasse und Sekundärmasse zumindest ein Klemmkörper (10) verlagerbar angeordnet ist, welcher sich in einer ersten ausgewählten Position mit dem anderen Schwungmassenelement von Primärmasse und Sekundärmasse verbindet, um diese relativ zueinander zu blockieren und welcher sich in einer zweiten ausgewählten Position nicht mit dem anderen Schwungmassenelement verbindet, so dass die beiden Schwungmassenelemente relativ zu einander verdrehbar sind, **dadurch gekennzeichnet, dass** der Kontakt zum anderen Schwungmassenelement und die Schwerpunktslage des Klemmkörpers 10 so gestaltet sind, dass eine Bewegungsselbsthemmung eintritt.

2. Drehmomentübertragungsvorrichtung nach Anspruch 1, **dadurch gekennzeichnet, dass** der Klemmkörper (10) ein verdrehbar gelagerter Klemmkörper (10) ist, welcher an dem einen Schwungmassenelement (2, 3) verdrehbar gelagert ist.

3. Drehmomentübertragungsvorrichtung nach Anspruch 1 oder 2, **dadurch gekennzeichnet, dass** das andere Schwungmassenelement (2, 3) einen in axialer Richtung vorstehenden Ringbereich aufweist, welcher den Klemmkörper (10) des einen Schwungmassenelements übergreift und der Klemmkörper an dem anderen Schwungmassenelement am Ringbereich in der ersten Position reibschlüssig anlegbar ist.

4. Drehmomentübertragungsvorrichtung nach einem der vorhergehenden Ansprüche, **dadurch gekennzeichnet, dass** eine Mehrzahl von Klemmkörpern (10) vorgesehen sind, welche an dem einen Schwungmassenelement (2, 3) drehbar angeordnet sind.

5. Drehmomentübertragungsvorrichtung nach einem der vorhergehenden Ansprüche, **dadurch gekennzeichnet, dass** der Klemmkörper (10) T-förmig ausgebildet ist, wobei die Drehachse des Klemmkörpers (10) durch einen Bereich im Fuß (14) des T geführt ist.

6. Drehmomentübertragungsvorrichtung nach einem der vorhergehenden Ansprüche, **dadurch gekennzeichnet, dass** der in axialer Richtung vorstehende Ringbereich ein mit dem anderen Schwungmassenelement (2, 3) verbundenes ringartiges Blechelement ist.

7. Drehmomentübertragungsvorrichtung nach einem der vorhergehenden Ansprüche, **dadurch gekennzeichnet, dass** der in axialer Richtung vorstehende Ringbereich im Schnitt L-förmig ausgebildet ist.

8. Drehmomentübertragungsvorrichtung nach einem der vorhergehenden Ansprüche, **dadurch gekennzeichnet, dass** die erste ausgewählte Position relativ zur zweiten ausgewählten Position um einen Drehwinkel verdreht ist, welche kleiner als 45° ist.

9. Drehmomentübertragungsvorrichtung nach einem der vorhergehenden Ansprüche, **dadurch gekennzeichnet, dass** das eine Schwungmassenelement (2, 3) die Sekundärmasse und das anderen Schwungmassenelement die Primärmasse ist.

10. Drehmomentübertragungsvorrichtung nach einem der vorhergehenden Ansprüche, **dadurch gekennzeichnet, dass** das eine Schwungmassenelement die Primärmasse und das andere Schwungmassenelement die Sekundärmasse ist.

## Claims

1. A torque-transmission device (1) having a primary mass (2) and a secondary mass (3), having a torsional vibration damper arranged between the primary mass and the secondary mass with at least one energy accumulator (8), wherein the primary mass is rotatably arranged, relative to the secondary mass, against the restoring force of the at least one energy accumulator (8), wherein at least one clamping body (10) is displaceably arranged on one of the flywheel mass elements of primary mass and secondary mass, which, in a first selected position, connects to the other flywheel mass element of primary mass and secondary mass in order to block them relative to each other and which, in a second selected position, does not connect to the other flywheel mass element so that the two flywheel mass elements are rotatable relative to one another, **characterised in that** the contact to the other flywheel mass element and the centre of gravity of the clamping body 10 are designed so that self-locking of movement occurs.

2. The torque-transmission device according to claim 1, **characterised in that** the clamping body (10) is a rotatably mounted clamping body (10) which is rotatably mounted on one flywheel mass element (2, 3).

3. The torque-transmission device according to claim 1 or 2, **characterised in that** the other flywheel mass element (2, 3) has an annular region projecting in the axial direction, which overlaps the clamping body (10) of one flywheel mass element, and that the clamping body can be frictionally applied in the first position on the other flywheel mass element in the annular region.

4. The torque-transmission device according to any one of the preceding claims, **characterised in that** a plurality of clamping bodies (10) are provided, which are rotatably arranged on one flywheel mass element (2, 3).

5. The torque-transmission device according to any one of the preceding claims, **characterised in that** the clamping body (10) is T-shaped, the axis of rotation of the clamping body (10) being guided through a region in the foot (14) of the T.

6. The torque-transmission device according to any one of the preceding claims, **characterised in that** the annular region projecting in the axial direction is an annular sheet metal element connected to the other flywheel mass element (2, 3).

7. The torque-transmission device according to any one of the preceding claims, **characterised in that** the annular region projecting in the axial direction is L-shaped in section.

8. The torque-transmission device according to any one of the preceding claims, **characterised in that** the first selected position is rotated relative to the second selected position by an angle of rotation which is less than 45°.

9. The torque-transmission device according to any one of the preceding claims, **characterised in that** one flywheel mass element (2, 3) is the secondary mass and the other flywheel mass element is the primary mass.

10. The torque-transmission device according to any one of the preceding claims, **characterised in that** one flywheel mass element is the primary mass and the other flywheel mass element is the secondary mass.

## Revendications

1. Dispositif de transmission de couple (1) comprenant une masse primaire (2) et une masse secondaire (3), comprenant un amortisseur de vibrations de torsion disposé entre la masse primaire et la masse secondaire pourvu d'au moins un accumulateur d'énergie (8), la masse primaire pouvant être tournée par rapport à la masse secondaire à l'encontre de la force de rappel dudit accumulateur d'énergie (8), sur l'un des éléments de masse d'inertie de la masse primaire et de la masse secondaire est disposé mobile au moins un corps de blocage (10), qui se relie dans une première position sélectionnée à l'autre élément de masse d'inertie de la masse primaire et de la masse secondaire, afin de les bloquer l'une par rapport à l'autre et qui ne se relie pas dans une seconde position sélectionnée à l'autre élément de masse d'inertie, de sorte que les deux éléments de masse d'inertie puissent tourner l'un par rapport à l'autre, **caractérisé en ce que** le contact avec l'autre élément de masse d'inertie et le centre de gravité du corps de blocage (10) sont conçus de sorte qu'un auto-blocage de déplacement se produise.

2. Dispositif de transmission de couple selon la revendication 1, **caractérisé en ce que** le corps de blocage (10) est un corps de blocage (10) monté rotatif qui est monté rotatif sur l'un des éléments de masse d'inertie (2, 3).

3. Dispositif de transmission de couple selon la revendication 1 ou 2, **caractérisé en ce que** l'autre élément de masse d'inertie (2, 3) présente une région annulaire faisant saillie dans la direction axiale, qui chevauche le corps de blocage (10) de l'un des éléments de masse d'inertie et le corps de blocage sur l'autre élément de masse d'inertie peut être disposé par friction sur la région annulaire dans la première position.

4. Dispositif de transmission de couple selon l'une des revendications précédentes, **caractérisé en ce qu'**une pluralité de corps de blocage (10) sont disposés rotatifs sur l'un des éléments de masse d'inertie (2, 3).

5. Dispositif de transmission de couple selon l'une des revendications précédentes, **caractérisé en ce que** le corps de blocage (10) est en forme de T, l'axe de rotation du corps de blocage (10) étant guidé à travers une zone du pied (14) du T.

6. Dispositif de transmission de couple selon l'une des revendications précédentes, **caractérisé en ce que** la région annulaire faisant saillie dans la direction axiale est un élément annulaire en tôle relié à l'autre élément de masse d'inertie (2, 3).

7. Dispositif de transmission de couple selon l'une des revendications précédentes, **caractérisé en ce que** la région annulaire faisant saillie dans la direction axiale est en forme de L en coupe.

8. Dispositif de transmission de couple selon l'une des revendications précédentes, **caractérisé en ce que** la première position sélectionnée est tournée par rapport à la seconde position sélectionnée selon un angle de rotation inférieur à 45°.

9. Dispositif de transmission de couple selon l'une des revendications précédentes, **caractérisé en ce que** l'un des éléments de masse d'inertie (2, 3) est la masse secondaire et l'autre élément de masse d'inertie est la masse primaire.

10. Dispositif de transmission de couple selon l'une des revendications précédentes, **caractérisé en ce que** l'un des éléments de masse d'inertie est la masse primaire et l'autre élément de masse d'inertie est la masse secondaire.
